# EUROPÄISCHE PATENTSCHRIFT

(11) **EP 0 820 903 B1**
(45) Veröffentlichungstag und Bekanntmachung des Hinweises auf die Patenterteilung: **14.05.2003**
(21) Anmeldenummer: 97104495.3
(22) Anmeldetag: 17.03.1997
(51) Int. Cl.: B60R 16/02

(54) **Modul zur Aufnahme einer Tagfahrlichtschaltung sowie eine Tagfahrlichtschaltung für ein derartiges Modul**
Module for retaining a daytime running light circuit and a daytime running light circuit for such a module
Module pour abriter un circuit de feux de conduite de jour et circuit de feux de conduite de jour pour un tel module

(30) Priorität: 27.07.1996 DE 19630425
(43) Veröffentlichungstag der Anmeldung: 28.01.1998
(73) Patentinhaber: Siemens Aktiengesellschaft, 80333 München (DE)
(72) Erfinder: Busser, Markus, 78465 Konstanz (DE); Autmaring, Stephan, 64832 Babenhausen (DE)

(56) Entgegenhaltungen:
- DE-C- 4 324 690
- US-A- 5 030 884
- US-A- 5 081 565

## Beschreibung

Die Erfindung betrifft ein Modul zur Aufnahme einer Tagfahrlichtschaltung, sowie eine Tagfahrlichtschaltung für ein solches Modul, wie sie in Kraftfahrzeugen Einsatz finden und beispielsweise aus der US 5 081 565 A bekannt sind.

In einigen Ländern sind Tagfahrleuchten vorgeschrieben, die anderen Verkehrsteilnehmern zeigen sollen, ob ein Kraftfahrzeug sich bewegt oder nicht. Üblicherweise werden mit der Zündung Standlicht und Abblendlicht dieses Fahrzeuges eingeschaltet, um die oben beschriebene Funktion der Tagfahrleuchten zu übernehmen.

Diese Tagfahrleuchten bzw. die Verwendung der Stand- und Abblendleuchten zu diesem Zweck müssen bei der Konzeption der Fahrzeugelektrik mit berücksichtigt werden.

Der Erfindung liegt die Aufgabe zugrunde eine Tagfahrlichtschaltung anzugeben, die einfach in jedem Kraftfahrzeug nachrüstbar ist.

Erfindungsgemäß ist die Aufgabe durch die Merkmale des Anspruchs 1 bzw. 8 gelöst. Das Modul weist mindestens eine Steckkontakteinrichtung zum Einstecken in einen Sicherungsplatz einer Kraftfahrzeugzentralelektrik und mindestens einen Steckplatz zur Aufnahme einer Sicherung auf, wobei elektrische Verbindungen zur Betriebsspannung, Zündschaltung und Masse vorhanden sind und die Sicherung die elektrische Verbindung der Tagfahrlichtschaltung zu einem Leuchtenkreis realisiert.

Der Vorteil der Erfindung besteht darin, daß in der Serienfertigung nur geringe Vorhaltungen benötigt werden, so daß die Tagfahrlichtschaltung nachträglich in jedes Fahrzeug montiert werden kann.

Besonders komfortabel ist es dabei, wenn je eine Steckkontakteinrichtung zur Verbindung mit der fest in der Zentralelektrik verdrahteten Betriebsspannung und Zündschaltung vorgesehen ist, weil dadurch der Verdrahtungsaufwand beim nachträglichen Einbau verringert wird.

Dabei werden Spannungsabfälle, die üblicherweise an Kabelverbindungen zu einem entfernt gelegenen Tagfahrlichtmodul entstehen, verhindert und eine verlustarme Versorgung der Leuchten gewährleistet.

In einer Weiterbildung ist das Modul mit annähernd schwalbenschwanzförmigen Ausnehmungen versehen, deren Gegenstücke an der Außenseite der Zentralelektrik angeformt sind. Dadurch ist das Modul durch einfaches Verrasten direkt in die Zentralelektrik bei gleichzeitiger elektrischer Kontaktierung durch die Steckkontakte einsteckbar. Insbesondere wird dadurch eine mechanische Entlastung der Steckkontakte gewährleistet.

Um auch auf Sicherungsplätze zugreifen zu können, die nicht im Randbereich der Zentralelektrik angeordnet sind, ist das Modul in einer Ausführungsform zweiteilig gestaltet, wobei das erste Teil des Moduls die Steckkontakteinrichtung zum Einstecken in den Sicherungsplatz der Zentralelektrik trägt, während der im ersten Teil über ein weiteres Kabel verbundene zweite Teil des Moduls den Steckplatz zur Aufnahme der Sicherung aufweist.

Vorteilhafterweise ist bei allen aufgezeigten Möglichkeiten eine schraubbare Verbindung der Masseleitung an der Karosserie vorgesehen.

Eine Tagfahrlichtschaltung, welche auf einfache Weise in diesem Modul realisiert werden kann und bei Einschaltung der Zündung die Leuchten des Standlichtes und/oder Abblendlichtes mit Betriebsspannung verbindet, besteht aus einem Schließer-Relais, das durch die Zündung des Kraftfahrzeuges angesteuert wird. Das Schließer-Relais ist zwischen Betriebsspannung und den Leuchten des Standlichtes angeordnet, wobei in Reihe zum Schließer-Relais ein Öffner-Relais angeordnet ist, über welches die Leuchten des Abblendlichtes von einem Lichtwahlschalter schaltbar sind, wobei je ein Spulenanschluß der beiden Relais an Masse liegt.

Dabei sind parallel zu den Leuchten des Standlichtes die Begrenzungs-, Schluß-, Kennzeichen- und/oder Instrumentenleuchten angeschlossen, welche über das Schließer-Relais mit der Betriebsspannung verbindbar sind.

Vorteilhafterweise ist der Lichtwahlschalter über eine erste Diode mit der Zündung verbunden.

In einer Ausgestaltung ist der Lichtwahlschalter ein Lenkstockschalter zum manuellen Ein- und Ausschalten des Stand-, Abblend- und Fernlichtes oder eine separate Schalteinheit für diese Funktionen.

Der Zündschalter ist dabei über eine zweite Diode mit dem Schließer-Relais und dem Öffner-Relais verbunden.

In jedem Leuchtenkreis des Abblend- und des Standlichtes ist in den Zuleitungen zu den Leuchten jeweils eine Sicherung angeordnet.

Durch das Einstecken des diese Tagfahrlichtschaltung enthaltenden Moduls in die Sicherungsplätze der Zentralelektrik und der Anordnung der Sicherungen auf dem Modul wird vor jedem Leuchtenkreis des Abblend- und des Standlichtes der elektrische Stromkreis über die jeweilige ins Modul eingesteckte Sicherung geschlossen.

Die Erfindung läßt zahlreiche Ausführungen zu. Eine soll anhand der in der Zeichnung dargestellten Figuren näher erläutert werden.

Es zeigt
- Fig. 1:: Prinzip der erfindungsgemäßen Tagfahrlichtschaltung
- Fig. 2:: die elektrische Anordnung der Tagfahrlichtschaltung im Kraftfahrzeug
- Fig. 3a-c:: mögliche Varianten der Gestaltung des erfindungsgemäßen Moduls
- Fig. 4:: Anordnung der Sicherungssteckplätze an der Zentralelektrik

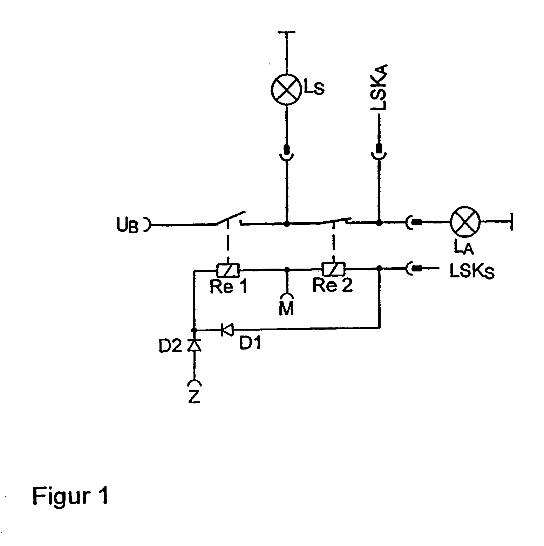

Gemäß Fig. 1 besteht die Tagfahrlichtschaltung aus einem Schließer-Relais Re1 und einem in Reihe dazu angeordneten Öffner-Relais Re2, welches elektrisch mit einem Lenkstockschalter LSK verbunden ist. Das Relais Re2 ist über eine in Durchlaßrichtung betriebene Diode D1 mit der Kathode einer zweiten Diode D2 verbunden, deren Anode an die Zündleitung Z des Kraftfahrzeuges führt. Der Verbindungspunkt zwischen beiden Relais Re1 und Re2 ist mit Masse verbunden.

Mit Hilfe der eingeschalteten Zündung schließt das Relais Re1 eine Verbindung zwischen Betriebsspannung U_{B} und den Leuchten L_{S} des Standlichtstromkreises.

Ist die Zündung aus und befindet sich der Lenkstockschalter LSK in der Stellung "Licht aus" sind beide Relais Re1 und Re2 nicht bestromt und alle Lampen sind aus.

Ist die Zündung eingeschaltet und der Lenkstockschalter LSK in der Stellung "Licht aus" zieht das Schließer-Relais Re1 an, und das Öffner-Relais Re2 befindet sich im Ruhezustand. Die Standlichter L_{S} und die Abblendleuchten L_{A} werden über die Betriebsspannung U_{B} bestromt. Befindet sich der Lenkstockschalter in der Stellung "Standlicht an" LSK_{S} zieht das Schließer-Relais an und das Öffner-Relais Re2 macht auf, so daß die Abblendleuchten L_{A} nicht mehr bestromt werden. Befindet sich der Lenkstockschalter LSK auf Abblendlicht LSK_{A} werden beide Relais Re1 und Re2 angezogen. Das Standlicht wird über das Schließer-Relais Re1, das Abblendlicht über die Lenkstockschalter LSK direkt bestromt. Befindet sich der Lenkstockschalter LSK in der Position "Fernlicht an" ist durch die direkte Bestromung des Abblendlichtes im Lenkstockschalter LSK die Umschaltung auf Fernlicht weiter ermöglicht.

Die Funktion der Nebelschlußleuchte und der Nebelscheinwerfer kann durch die weitere Verschaltung der Lichtanlage gewählt werden.

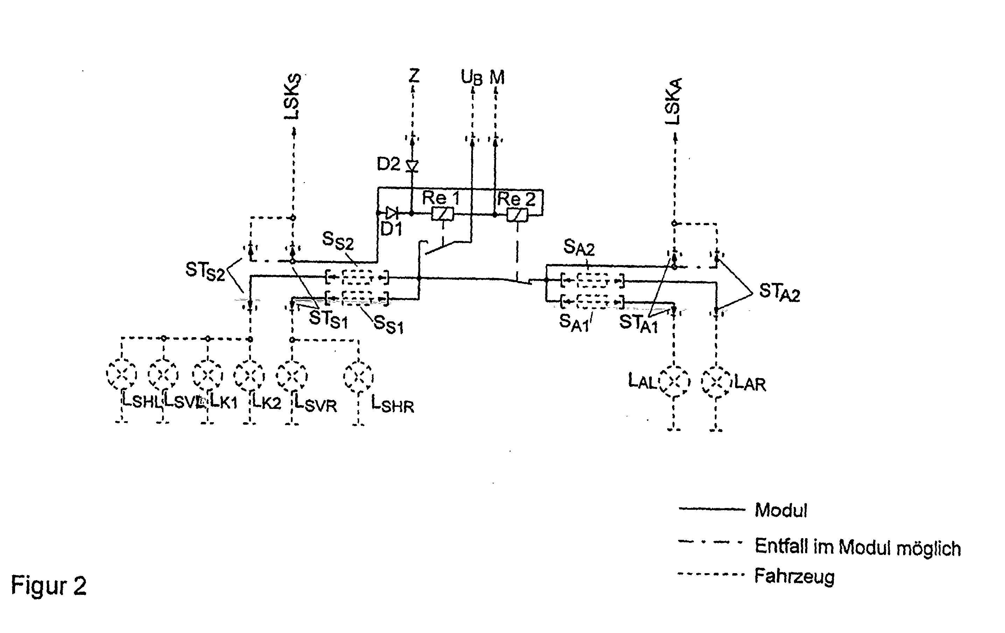

Die beschriebene Tagfahrlichtschaltung ist in einem Modul angeordnet, wie es aus Fig. 2 ersichtlich ist.

Eine erste Sicherung S_{S1} verbindet das Schließer-Relais Re1 mit der rechts vorn angeordneten Standlichtleuchte LS_{VR} und der hinten rechts im Fahrzeuge befindlichen Standlichtleuchte LS_{HR}, welche parallel zueinander geschaltet sind.

Ebenfalls parallel sind die Leuchten des hinteren linken Standlichtes L_{SHL}, des vorderen linken Standlichtes L_{SVL} und die Kennzeichenleuchten L_{K1} und L_{K2} geschaltet. Dieser Strompfad wird über die Sicherung S_{S2} abgesichert, die einerseits mit dem Schließer-Relais Re1 und dem Öffner-Relais Re2 und andererseits mit den schon erwähnten Leuchten verbunden ist.

Die linke Abblendlichtleuchte L_{AL} ist über die Sicherung S_{A1} mit dem Öffner-Relais Re2 und der Klemme LSK_{A} des Lenkstockschalters LSK des Kraftfahrzeuges verbunden. Auch die rechte Abblendleuchte L_{AR} führt über eine weitere Sicherung S_{A2} an die Klemme LSK_{A} des Lenkstockschalters LSK und das Relais Re2. Außerdem sind die Diode D1 und das Öffner-Relais Re2 mit der Lenkstockschalter-Klemme LSK_{S} verbunden.

Wie schon erwähnt, ist die Schaltung mit der Zündspannung Z, Betriebsspannung U_{B} und Masse M verbunden.

Eine Vereinfachung des Moduls ist durch den Entfall jeweils eines Kontaktes zur Zuführung der Potentiale vom Lenkstockschalter LSK auf das Modul möglich. Dies ist in Fig. 2 für die Steckplätze ST_{A2} und ST_{S2} verdeutlicht.

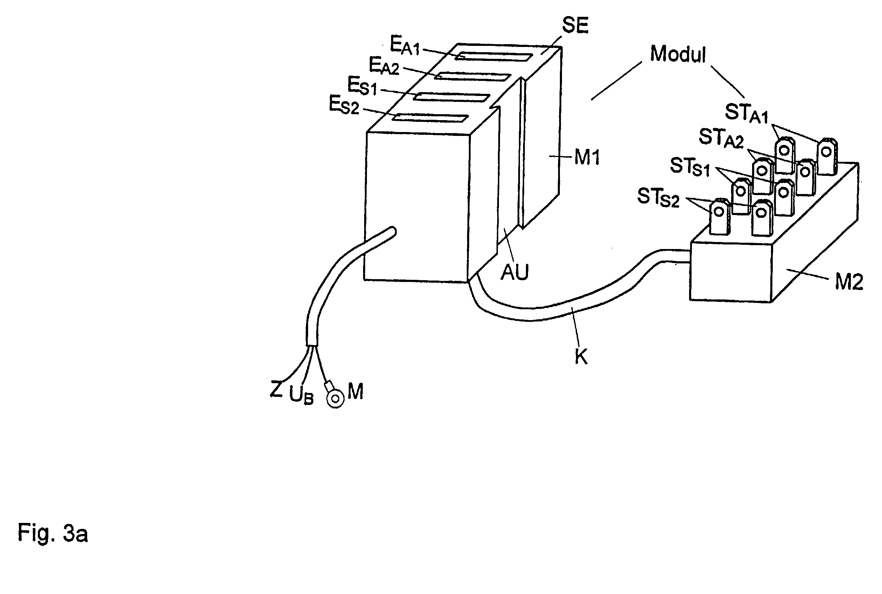

Wie aus den Figuren 3a - c ersichtlich, werden dem die Tagfahrlichtschaltung beinhaltenden Modul diese Spannungen über elektrische Kabel zugeführt.

Das Modul gemäß Fig. 3a ist dabei zweiteilig gestaltet. Das erste Teil M1 enthält dabei die eigentliche Tagfahrlichtschaltung und es werden die Kabel der entsprechenden Versorgungsspannungen U_{B}, Z, M entweder seitlich oder an der Grundfläche des Modulteils M1 zugeführt. Die Stirnseite diese Teils M1 weist vier Steckkontakteinrichtungen E_{A1}, E_{A2}, E_{S1}, E_{S2} für die Sicherungen S_{S1}, S_{S2}, S_{A1}, S_{A2} auf.

Vorteilhafterweise seitlich weist dieses Teilmodul M1 eine annähernd schwalbenschwanzförmige Ausnehmung AU auf, deren Gegenstück an einer Zentralelektrik angeordnet ist.

Mit Hilfe dieser Ausnehmung AU wird das Teilmodul M1 im Fahrzeug einfach und erschütterungsfest montiert.

Mittels eines Kabels K wird das erste Modulteil M1 mit einem zweiten Teil des Moduls M2 verbunden, welches jeweils zwei Steckeinrichtungen ST_{A1}, ST_{A2}, ST_{S1}, ST_{S2} für jeden Lampenkreis enthält. Diese Steckeinrichtungen werden in die entsprechenden Sicherungspositionen der Fahrzeugzentralelektrik gesteckt.

Das beschriebene Modul bietet eine einfache Möglichkeit zur Nachrüstung eines Kraftfahrzeuges mit einer Tagfahrlichtschaltung.

Der Einbau dieses Moduls in die Kraftfahrzeugzentralelektrik erfolgt nach Ziehen der Sicherungen für Stand- und Abblendlicht in diese Steckplätze. Entscheidend ist, daß die Sicherungsbelegung an das Tagfahrlichtmodul angepaßt wird. Die Sicherung kann dann wieder in das Modul eingesteckt werden, um die Leitungen abzusichern.

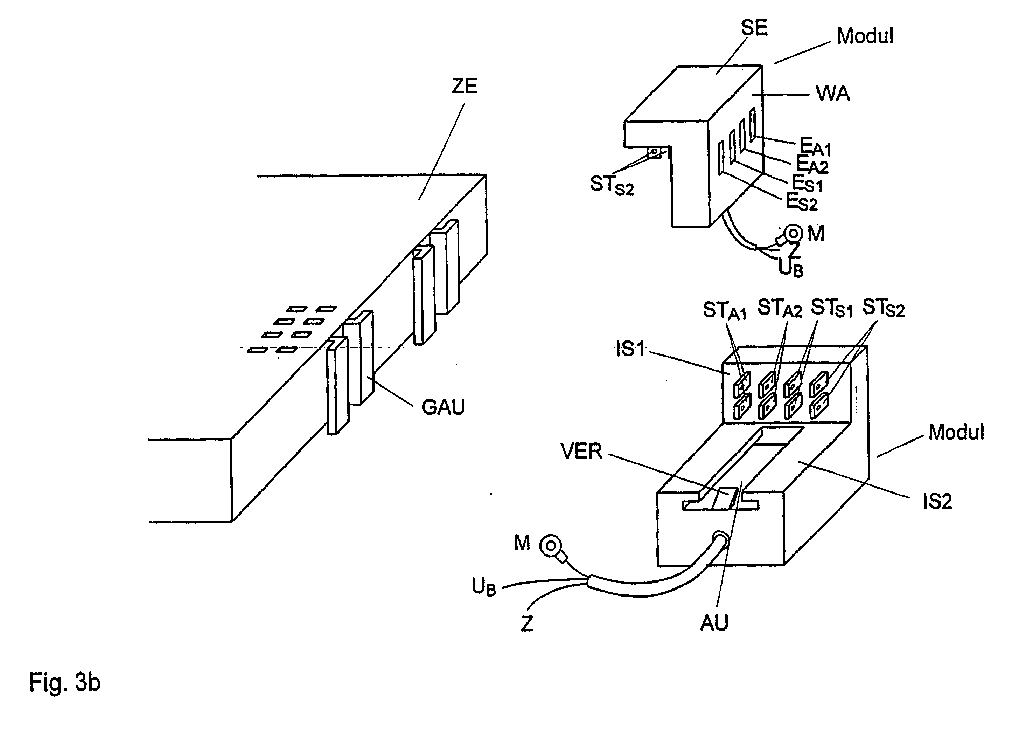

In Fig. 3b ist ein einstückiges Modul dargestellt, welches L-förmig gestaltet ist. Die Sicherungssteckplätze E_{A1}, E_{A2}, E_{S1}, E_{S2} sind dabei an einer Seitenaußenwand WA des Moduls M vorgesehen. Es ist aber auch denkbar, daß die Sicherungssteckplätze E_{A1}, E_{A2}, E_{S1}, E_{S2} auf der Stirnseite SE des Moduls angeordnet sind.

Innenliegend (Innenseite IS1) sind an einem Schenkel des L-förmigen Moduls die Steckeinrichtungen ST_{A1}, ST_{A2}, ST_{S1}, ST_{S2} zum Einschub in die Sicherungspositionen der Zentralelektrik ZE vorgesehen. Die schwalbenschwanzförmige Ausnehmung AU ist dabei auf der Innenseite IS2 des anderen Schenkels des Moduls angeordnet. Das Gegenstück GAU dieser Ausnehmung ist direkt an der Zentralelektrik ZE angeordnet, so daß das Modul direkt an dieser montiert werden kann.

Die Schwalbenschwänze werden dabei beim Spritzgießen des Kunststoffteiles, aus welchem das Modul besteht, angeformt. Die Schwalbenschwänze werden auf das Gegenstück GAU aufgeschoben. Ferner kann das Modul mit Verriegelungen VER gegen unbeabsichtigtes Lösen gesichert werden.

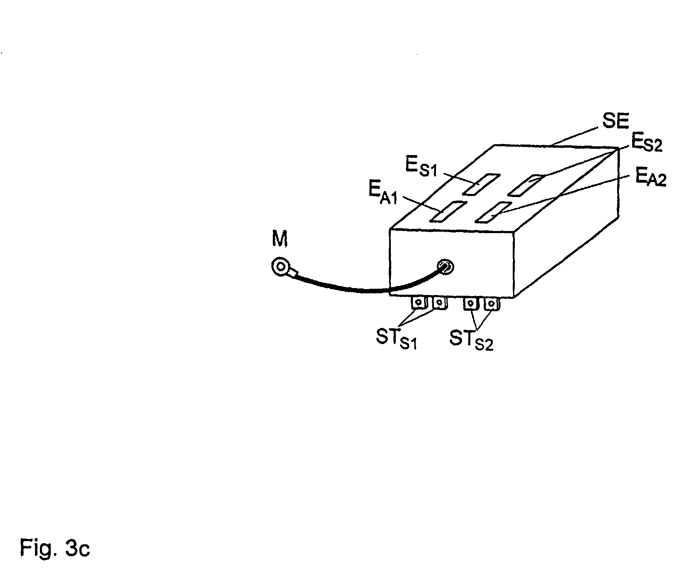

Ein kompaktes Modul, welches nur eine Anschlußleitung für die Masse M aufweist, die vorteilhafterweise an der Karosserie des Fahrzeuges verschraubt werden kann, ist in Fig. 3c dargestellt.

Die Versorgung mit Zündung und die Sicherungssteckplätze E_{A1}, E_{A2}, E_{S1}, E_{S2} sind wieder auf der Stirnseite SE des Moduls vorgesehen. Auf der gegenüberliegenden Seite des Moduls sind die Steckeinrichtungen ST_{A1}, ST_{A2}, ST_{S1}, ST_{S2} angeordnet.

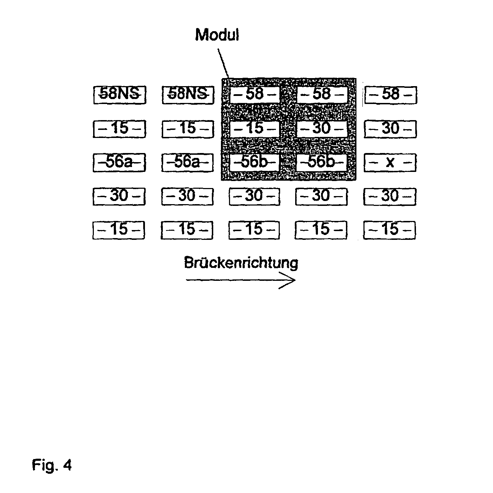

Da in der Zentralelektrik Brücken für gleiche Klemmen-Potentiale im Vergleich zu Leitungen sehr günstig vorgesehen werden können, ist es vorteilhaft die Anschlußbelegung des Tagfahrlichtmoduls in das Sicherheitslayout mit einzubeziehen was in Fig. 4 verdeutlicht wird.

Die Bezeichnungen auf den Sicherungspositionen geben die Klemmen der Zuführungen an.

Dabei sind
- Klemme 30:: Sicherung von der Betriebsspannung U_{B} versorgt,
- Klemme 58:: Standlichtleitung vom Lenkstockschalter oder separater Einheit,
- Klemme 56b:: Abblendlicht vom Lenkstockschalter oder separater Einheit,
- Klemme 56a:: Fernlicht vom Lenkstockschalter oder separater Einheit,
- Kleimme 15:: Zündspannung, geschaltete Klemme 30

Bei der dargestellten Brückenrichtung läßt sich die Versorgung der Schaltung durch die Vorhaltung von zwei Brücken realisieren. Da Massepotential üblicherweise auf Sicherungsträgern nicht vorhanden ist, empfiehlt sich dafür der Anschluß über eine Leitung.

## Patentansprüche

1. Modul zur Aufnahme einer Tagfahrlichtschaltung, wobei elektrische Verbindungen zur Betriebsspannung (U_{B}), Zündschaltung (Z) und Masse (M) vorhanden sind, **dadurch gekennzeichnet, daß** es mindestens eine Steckkontakteinrichtung (ST_{A1}, ST_{A2}, ST_{S1}, ST_{S2}) zum Einstecken in einen Sicherungsplatz einer Sicherung (S_{A1}, S_{A2}, S_{S1}, S_{S2}) eines Leuchten schaltkreises) einer Kraftfahrzeugzentralelektrik (ZE) und mindestens einen Steckplatz (E_{A1}, E_{A2}, E_{S1}, E_{S2}) zur Aufnahme der Sicherung aufweist, und die Sicherung die elektrische Kontaktierung der Tagfahrlichtschaltung zu dem Leuchtenschaltkreis realisiert.

2. Modul nach Anspruch 1, **dadurch gekennzeichnet, daß** je eine Steckkontakteinrichtung zur Verbindung mit der fest in der Zentralelektrik verdrahteten Betriebsspannung und Zündschaltung vorgesehen ist.

3. Modul nach Anspruch 1, **dadurch gekennzeichnet, daß** die Betriebsspannung (U_{B}) und die Zündschaltung (Z) durch elektrische Kabel zugeführt werden.

4. Modul nach Anspruch 2 oder 3, **dadurch gekennzeichnet, daß** die elektrische Verbindung an Masse (M) über ein Kabel erfolgt.

5. Modul nach einem der Ansprüche 1, 2 oder 3, **dadurch gekennzeichnet, daß** es zweiteilig (M1, M2) gestaltet ist, wobei das erste Teil (M2) die Steckkontakteinrichtungen zum Einstecken in den Sicherungsplatz der Zentralelektrik (Z) trägt, während der mit dem ersten Teil (M2) über ein weiteres Kabel verbundene zweite Teil (M1) den Steckplatz zur Aufnahme der Sicherung aufweist.

6. Modul nach einem der Ansprüche 1, 2 oder 3, **dadurch gekennzeichnet, daß** es annähernd schwalbenschwanzförmige Ausnehmungen (AU, GAU) aufweist, mittels welcher eine Befestigung an der Zentralelektrik (E) erfolgt.

7. Modul nach einem der vorhergehenden Ansprüche 1 bis 6, **dadurch gekennzeichnet, daß** es ein Kunststoffspritzteil ist.

8. Tagfahrlichtschaltung für ein in einem Kraftfahrzeug angeordnetes Modul nach Anspruch 1, bei welcher mit Einschaltung der Zündung (Z) die Leuchten des Standlichtes (L_{SHL}, L_{SVL}, L_{SVR}, L_{SHR}) und/oder des Abblendlichtes (L_{AL}, L_{AR}), mit Betriebsspannung verbunden sind, **dadurch gekennzeichnet, daß** die Zündung (Z) des Kraftfahrzeuges ein Schließer-Relais (Re1) ansteuert, welches zwischen Betriebsspannung (U_{B}) und den Leuchten (L_{S}) des Standlichtes angeordnet ist, wobei in Reihe zum Schließer-Relais (Re1) ein Öffner-Relais (Re2) angeordnet ist, über welches die Leuchten des Abblendlichtes (L_{A}) von einem Lichtwahlschalter (LSK) schaltbar sind und jeweils ein Spulenanschluß der beiden Relais (RE1, RE2) an Masse liegt.

9. Tagfahrlichtschaltung nach Anspruch 7, **dadurch gekennzeichnet, daß** parallel zu den Leuchten des Standlichtes (L_{S}) die Begrenzungs-, Schluß-, Kennzeichen und/oder Instrumentenleuchten des Kraftfahrzeuges angeschlossen sind, welche über das Schließer-Relais (Re1) mit der Betriebsspannung (U_{B}) verbindbar sind.

10. Tagfahrlichtschaltung Anspruch 7 oder 8, **dadurch gekennzeichnet, daß** der Lichtwahlschalter (LSK) über eine erste Diode (D1) mit der Zündung (Z) verbunden ist.

11. Tagfahrlichtschaltung nach Anspruch 9, **dadurch gekennzeichnet, daß** der Lichtwahlschalter (LSK) ein Lenkstockschalter zum manuellen einund ausschalten des Stand-, Abblend- und Fernlichtes ist.

12. Tagfahrlichtschaltung nach einem der vorhergehenden Ansprüche, **dadurch gekennzeichnet, daß** der Zündschalter (Z) über eine zweite Diode (D2) mit dem Schließer-Relais (RE1) und dem Öffner-Relais (RE2) verbunden ist.

13. Tagfahrlichtschaltung nach einem der vorhergehenden Ansprüche, **dadurch gekennzeichnet, daß** in jedem Leuchtenkreis des Abblend- (L_{A}) und des Standlichtes (L_{S}) unmittelbar vor den Leuchten jeweils eine Sicherung (S_{S1}, S_{S2}; S_{A1}, S_{A2}) angeordnet ist.

## Claims

1. Module for holding a daytime running light circuit, electric connections being present for operating voltage (U_{B}), ignition circuit (Z) and frame (M), **characterized in that** the module has at least one plug-in contact device (ST_{A1}, ST_{A2}, ST_{S1}, ST_{S2}) for plugging into a fuse location of a fuse (S_{A1}, S_{A2}, S_{S1}, S_{S2}) of a lamp circuit of a motor vehicle central electrical system (ZE) and at least one plug-in location (E_{A1}, E_{A2}, E_{S1}, E_{S2}) for holding the fuse, and the fuse makes the electric contact between the daytime running light circuit and the lamp circuit.

2. Module according to Claim 1, **characterized in that** one plug-in contact device each is provided for connecting to the operating voltage, hard-wired in the central electrical system, and ignition circuit.

3. Module according to Claim 1, **characterized in that** the operating voltage (U_{B}) and the ignition circuit (Z) are fed by means of electric cables.

4. Module according to Claim 2 or 3, **characterized in that** the electric connection to frame (M) is performed via a cable.

5. Module according to one of Claims 1, 2 or 3, **characterized in that** it is of bipartite (M1, M2) form, the first part (M2) bearing the plug-in contact devices for plugging into the fuse location of the central electrical system (Z), while the second part (M1), connected to the first part (M2) via a further cable, has the plug-in location for holding the fuse.

6. Module according to one of Claims 1, 2 or 3, **characterized in that** it has recesses (AU, GAU) of approximately swallow-tailed shape which effect fastening on the central electrical system (E).

7. Module according to one of the preceding Claims 1 to 6, **characterized in that** it is a plastic injection-moulded part.

8. Daytime running light circuit for a module arranged in a motor vehicle according to Claim 1, in which the lamps of the parking light (L_{SHL}, L_{SVL}, L_{SVR}, L_{SHR}) and/or of the dipped beam (L_{AL}, L_{AR}) are connected to operating voltage when the ignition (Z) is switched on, **characterized in that** the ignition (Z) of the motor vehicle drives an NOC relay (Re1) which is arranged between operating voltage (U_{B}) and the lamps (L_{S}) of the parking light, there being arranged in series with the NOC relay (Re1) an NCC relay (Re2) via which the lamps of the dipped beam (L_{A}) can be switched by a light selector switch (LSK), and in each case one coil terminal of the two relays (RE1, RE2) is connected to frame.

9. Daytime running light circuit according to Claim 7, **characterized in that** connected in parallel with the lamps of the parking light (L_{S}) are the clearance, rear, licence-plate and/or instrument lamps of the motor vehicle, which can be connected to the operating voltage (U_{B}) via the NOC relay (Rel).

10. Daytime running light circuit according to Claim 7 or 8, **characterized in that** the light selector switch (LSK) is connected to the ignition (Z) via a first diode (D1).

11. Daytime running light circuit according to Claim 9, **characterized in that** the light selector switch (LSK) is a steering column switch for manually switching on and off the parking light, dipped beam and main beam.

12. Daytime running light circuit according to one of the preceding claims, **characterized in that** the ignition switch (Z) is connected via a second diode (D2) to the NOC relay (RE1) and the NCC relay (RE2).

13. Daytime running light circuit according to one of the preceding claims, **characterized in that** a fuse (S_{S1}, S_{S2}; S_{A1}, S_{A2}) is arranged in each case in each lamp circuit of the dipped beam (L_{A}) and the parking light (L_{S}) immediately in front of the lamps.

## Revendications

1. Module destiné à recevoir un circuit de feux pour conduite de jour, les connexions électriques menant à la tension de fonctionnement (U_{B}), au circuit d'allumage (Z) et à la masse (M) tétant disponibles, **caractérisé en ce qu'**il présente au moins un dispositif de mise en contact par enfichage (ST_{A1}, ST_{A2}, ST_{S1}, ST_{S2}) pour l'enfichage dans un emplacement de fusibles d'un fusible (S_{A1}, S_{A2}, S_{S1}, S_{S2}) d'un circuit des feux d'un équipement électrique central (ZE) d'un véhicule automobile et au moins un emplacement d'enfichage (E_{A1}, E_{A2}, E_{S1}, E_{S2}) destiné à recevoir le fusible et **en ce que** le fusible réalise la mise en contact électrique du circuit de feux pour conduite de jour avec le circuit des feux.

2. Module selon la revendication 1, **caractérisé en ce qu'**il est prévu un dispositif de mise en contact par enfichage pour la connexion à la tension de fonctionnement et au circuit d'allumage, câblés de manière fixe dans l'équipement électrique central.

3. Module selon la revendication 1, **caractérisé en ce que** la tension de fonctionnement (U_{B}) et le circuit d'allumage (Z) sont amenés par le biais de câbles électriques.

4. Module selon la revendication 2 ou 3, **caractérisé en ce que** la liaison électrique à la masse (M) s'effectue par le biais d'un câble.

5. Module selon l'une des revendications 1, 2 ou 3, **caractérisé en ce qu'**il est réalisé en deux parties (M1, M2), la première parie (M2) portant les dispositifs de mise en contact par enfichage destinés à être enfichés dans l'emplacement de fusibles de l'équipement électrique central (Z) tandis que la deuxième partie (M1), reliée à la première partie (M2) par le biais d'un câble supplémentaire, présente l'emplacement d'enfichage destiné à recevoir le fusible.

6. Module selon l'une des revendications 1, 2 ou 3, **caractérisé en ce qu'**il présente des évidements (AU, GAU) sensiblement en forme de queue d'aronde au moyen desquels s'effectue une fixation sur l'équipement électrique central (E).

7. Module selon l'une des revendications précédentes 1 à 6, **caractérisé en ce qu'**il s'agit d'une pièce injectée en matière plastique.

8. Circuit de feux pour conduite de jour destiné à un module selon la revendication 1 disposé dans un véhicule automobile dans lequel, lors de la mise en marche de l'allumage (Z), les lumières des feux de position (L_{SHL}, L_{SVL}, L_{SVR}, L_{SHR}) et/ou des feux de croisement (L_{AL}, L_{AR}) sont connectées à la tension de fonctionnement, **caractérisé en ce que** l'allumage (Z) du véhicule automobile excite un relais de fermeture (Re1), lequel est disposé entre la tension de fonctionnement (U_{B}) et les lumières (L_{S}) des feux de position, un relais d'ouverture (Re2) étant monté en série avec le relais de fermeture (Re1), par l'intermédiaire duquel les lumières des feux de croisement (L_{A}) sont connectables par un sélecteur de feux (LSK) et une borne de bobine de chacun des deux relais (Re1,Re2) étant respectivement reliée à la masse.

9. Circuit de feux pour conduite de jour selon la revendication 8, **caractérisé en ce que**, en parallèle avec les lumières des feux de position (L_{S}) sont montés les feux de gabarit, les feux rouges arrière, les feux d'éclairage de la plaque d'immatriculation et/ou l'éclairage de tableau de bord du véhicule automobile, lesquels sont connectables à la tension de fonctionnement (U_{B}) par l'intermédiaire du relais de fermeture (Re1).

10. Circuit de feux pour conduite de jour selon la revendication 8 ou 9, **caractérisé en ce que** le sélecteur de feux (LSK) est connecté à l'allumage (Z) par l'intermédiaire d'une première diode (D1).

11. Circuit de feux pour conduite de jour selon la revendication 10, **caractérisé en ce que** le sélecteur de feux (LSK) est un commutateur de colonne de direction permettant d'allumer et d'éteindre manuellement les feux de position, de croisement et de route.

12. Circuit de feux pour conduite de jour selon l'une des revendications précédentes, **caractérisé en ce que** l'interrupteur d'allumage (Z) est connecté au relais de fermeture (Re1) et au relais d'ouverture (Re2) par le biais d'une deuxième diode (D2).

13. Circuit de feux pour conduite de jour selon l'une des revendications précédentes, **caractérisé en ce que**, dans chaque circuit de lumières des feux de croisement (L_{A}) et des feux de position (L_{S}), un fusible (S_{S1}, S_{S2}; S_{A1}, S_{A2}) est respectivement disposé immédiatement devant les lumières.
